# EUROPEAN PATENT SPECIFICATION

(11) **EP 1 908 631 B1**
(45) Date of publication and mention of the grant of the patent: **30.11.2011**
(21) Application number: 07019581.3
(22) Date of filing: 05.10.2007
(51) Int. Cl.: B60Q 1/08, B60Q 1/14

(54) **Headlight control apparatus for automobile**
Scheinwerfersteuerungsvorrichtung für ein Kraftfahrzeug
Appareil de contrôle de phare pour automobile

(30) Priority: 06.10.2006 JP 2006274580
(43) Date of publication of application: 09.04.2008
(73) Proprietor: Hitachi, Ltd., Chiyoda-ku Tokyo 100-8280 (JP)
(72) Inventor: Otsuka, Yuji c/o Hitachi Ltd., Tokyo 100-8220 (JP); Muramatsu, Shoji c/o Hitachi Ltd., Tokyo 100-8220 (JP); Shima, Takeshi c/o Hitachi Ltd., Tokyo 100-8220 (JP); Monji, Tatsuhiko c/o Hitachi Ltd., Tokyo 100-8220 (JP)
(74) Representative: MERH-IP Matias Erny Reichl Hoffmann

(56) References cited:
- DE-A1- 3 101 855
- US-A- 5 426 294
- US-A- 6 144 158
- US-A1- 2003 137 849
- US-A1- 2006 146 552

## Description

### Field of the invention

The present invention relates to a headlight control apparatus for an automobile.

### Description of related art

There has been researched and developed an art of automatically switching a high beam and a low beam of a headlight by analyzing a video image of an on-vehicle camera.

JP-B-6-55581 discloses an art of switching a headlight from a high beam to a low beam so as not to cause a driver of a preceding vehicle or an on-coming vehicle to be dazzled, by detecting tail light of the preceding vehicle or a headlight of the on-coming vehicle in a video image of a color camera.

JP-A-2002-526317 discloses a technique of continuously controlling an irradiation area of a headlight by calculating a distance to a preceding vehicle or an on-coming vehicle on the basis of a state of a headlight and a tail lamp in an image of a camera to further improve the above art. According to this technique, it becomes possible to achieve more appropriate control as compared with the two-stage control of the high beam and the low beam.

US 6,144,158 discloses another known technique of controlling an irradiation area.

### BRIEF SUMMARY OF THE INVENTION

In the above described Japanese prior arts, if the camera recognizes the reflection light from a reflector when the headlight of the own vehicle is switched to the high beam, the headlight of the own vehicle is changed to the low beam by erroneously recognizing the reflection light as a headlight beam of the on-coming vehicle. However, since the reflection light from the reflector becomes weak at the moment of switching the headlight to the low beam, it is determined that the headlight beam becomes absent, and the operation of switching the headlight to the high beam is repeated. That is, the high beam and the low beam are periodically switched, so that blinking is repeated. This is called hunting. There is the possibility that this hunting causes a feeling of strangeness of the driver of the own vehicle. Originally, the reflector is installed for the purpose of making it easy for a driver to recognize a road contour or the like at night, and the information of the reflector position is important in night driving.

Accordingly, the present invention provides a headlight control apparatus which suppresses a feeling of strangeness given to a driver of an own vehicle by hunting due to reflector light while preventing a preceding vehicle and an on-coming vehicle from being dazzled, on the basis of a video image obtained by a camera.

In the invention, a position of a light spot in an image captured by a camera is detected, and a headlight is controlled so as to perform irradiation with a pattern in which the light quantity is reduced in a certain area above the detected light spot.

There is provided a headlight control apparatus including a headlight for irradiating a front region of a vehicle, of which light quantity can be controlled in every partial area in the irradiated region, a camera mounted on the vehicle for capturing an image of the front region of the vehicle, and/or a control unit for detecting a position of a light spot in the image inputted from the camera to control an irradiation pattern of the headlight based on the position of the light spot, wherein the control unit is configured to control the headlight so as to reduce the light quantity in a certain area above the portion of the detected light spot as described in claim 1.

According to the invention, even if the reflector light causes the hunting, the irradiation light quantity of the entire irradiated area does not vary, but only the irradiation light quantity in a partial area above the reflector varies, and therefore, the feeling of strangeness given to the driver can be suppressed.

Other objects, features and advantages of the invention will become apparent from the following description of the embodiments of the invention taken in conjunction with the accompanying drawings.

### BRIEF DESCRIPTION OF THE SEVERAL VIEWS OF THE DRAWINGS

Fig. 1 is a block diagram of a method of controlling light distribution of a headlight;
Fig. 2 is a block diagram of a camera and an image analyzing unit;

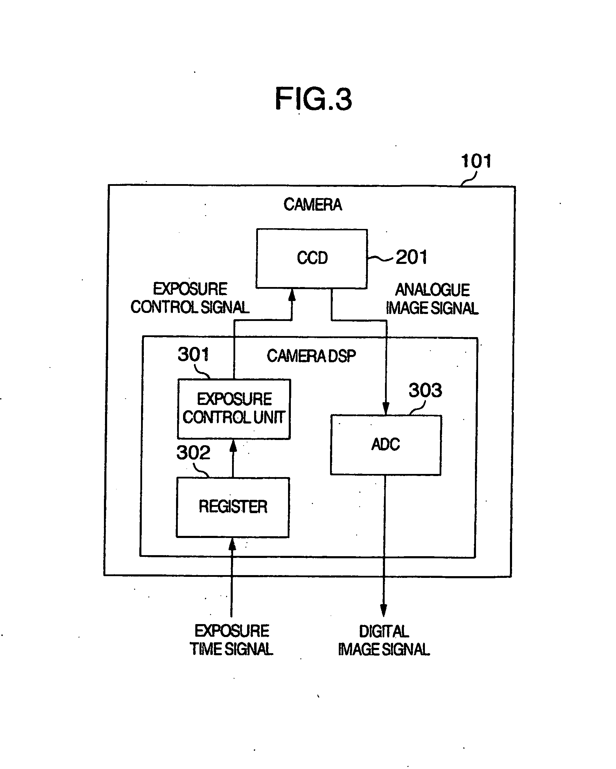

Fig. 3 is a detailed diagram of the inside of the camera;
Fig. 4 is a processing flow for calculating the distance between two vehicles on that basis of two images differing in exposure amount;
Figs. 5A, 5B and 5C are explanatory views of a state ahead of a vehicle in the case that a preceding vehicle and an on-coming vehicle are present;
Figs. 6A and 6B are explanatory views of a technique of detecting the positions of a headlight and a tail lamp;
Fig. 7 is a view for explaining the constraint of the arrangement of the camera and the headlight;
Figs. 8A and 8B are explanatory views showing the positions of mask areas on the basis of a detection result of the headlight and the tail lamp;
Figs. 9A and 9B are explanatory views of a light distribution pattern video image, and a position where a light projection quantity is actually reduced;
Fig. 10 is an explanatory diagram of the headlight and a headlight control unit; and
Fig. 11 is an explanatory view showing an LED array.

### DETAILED DESCRIPTION OF THE INVENTION

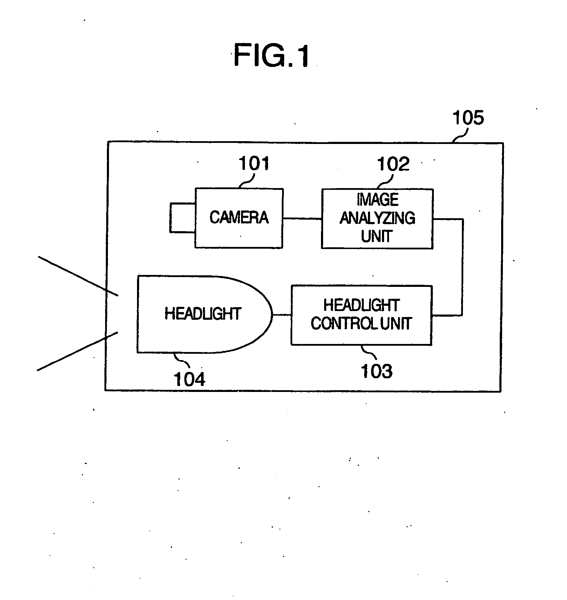

Fig. 1 is a schematic diagram showing an entire configuration for achieving a method of controlling light distribution of a headlight, which is an embodiment according to the present invention. A cameral 101 is mounted on a vehicle so as to capture a field of view ahead of the vehicle, and a headlight 104 is mounted on the vehicle so as to illuminate a front region ahead of the vehicle.

Regarding the arrangement, it is desirable that the camera 101 and the headlight 104 are installed as near to each other as possible. This leads to simplification of calibration of optical axis adjustment or the like. As shown in Fig. 1, it is convenient from the viewpoint of the optical axis adjustment to install both the camera 101 and the headlight 104 inside one headlight unit 105. This is because the optical axis of the camera 101 and the optical axis of the headlight 104 can be aligned with each other within the range of a certain assembly tolerance, and therefore, by adjusting the installation angle of the headlight unit 105 to the vehicle, both optical axes of the camera 101 and the headlight 104 can be adjusted while maintaining correlation of the optical axes of the cameral 101 and the headlight.

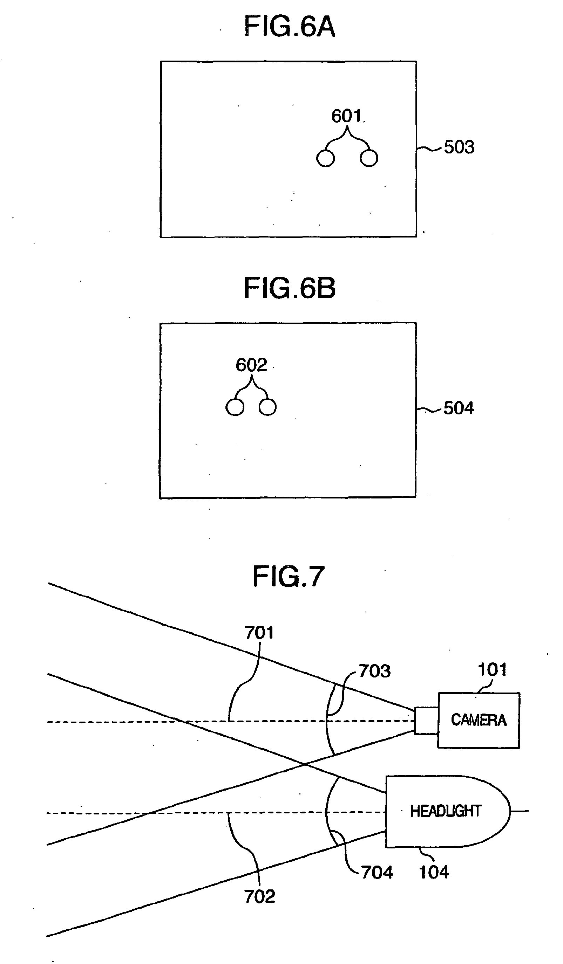

Further, as shown in Fig. 7, the optical axis 701 of the camera 101 and the optical axis 702 of the headlight 104 are made parallel with each other. This is because, if the optical axes are not parallel with each other, a gap is generated between a spatial position captured by the camera 101 and a spatial position to which the light is projected by the headlight 104. The angle of view 703 of the camera is made equal to the light projection angle 704 of the headlight.

However, if there is no room in the space of the headlight unit 105, and the cameral 101 cannot be housed in the space, the camera 101 may be installed in a cabin, for example, in an inmost recess of an rearview mirror or the like, to be installed in the position where the camera 101 can take a front region ahead of the vehicle. In this case, a gap is generated between the center points of the image captured area by the camera 101 and the light projection area by the headlight 104, and therefore, the image captured by the camera 101 is converted into an image seen from the position of the headlight 104. Specifically, the coordinates which are set as a center point on the captured image data are slid, and zoom processing is performed based on the distance between the camera mounting position and the headlight mounting position.

By performing similar processing, the configuration in which only one of the left and right headlight units 105 is loaded with the camera 101 and the other headlight unit 105 is not loaded with the camera 101 may be adopted. That is, the image captured by the camera 101 loaded on one of the headlight units 105 is converted into an image seen from the position of the headlight 104 on the opposite side, and the light distribution of the headlight can be controlled based on the image.

The vehicle front region image captured up by the camera 101 is inputted into an image analyzing unit 102. The image analyzing unit 102 obtains the positions of light spots estimated as a headlight of an on-coming vehicle and a tail light of a preceding vehicle based on the inputted image. Subsequently, the image analyzing unit 102 generates a light distribution pattern which reduces the light quantity of a part of an upper portion above the detected light spot portion areas, and transmits the light distribution pattern to a headlight control unit 103 as a video image signal. In the headlight control unit 103, the received video image information is returned to the light distribution pattern of the headlight 104, and a liquid crystal plate in the headlight 104 is controlled. Hereinafter, the processing in each units will be described in detail.

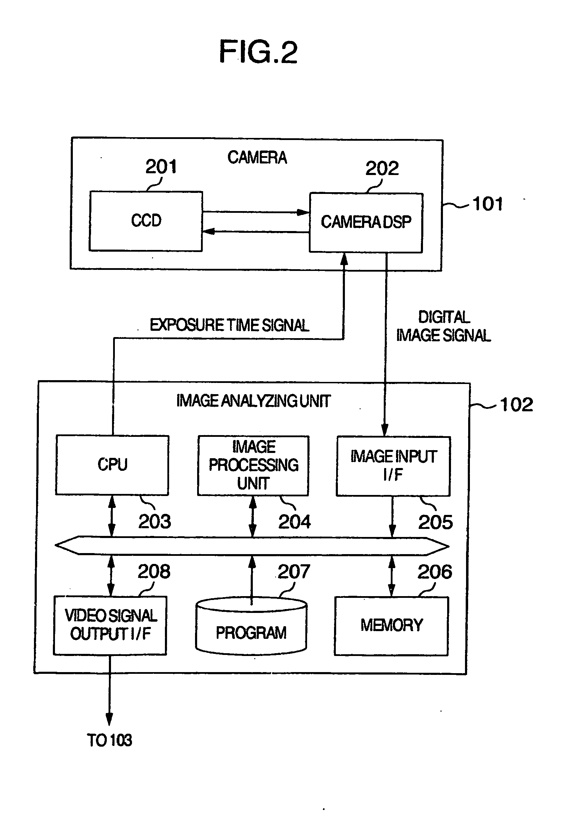

Next, a method of detecting the headlight of the on-coming vehicle and the tail light of the preceding vehicle with a camera will be described. Fig. 2 is a diagram showing an internal configuration of the camera 101 and the image analyzing unit 102. A CCD 201 is an image capturing element which converts light into an electric charge. The CCD 201 converts the video image of the region ahead of the vehicle into an analogue image signal, and transfers the analog image signal to a camera DSP 202. The camera DSP 202 includes an ADC (Analog-Digital Converter) 303 therein, converts the analogue image signal into a digital signal and transmits the digital signal to an image input I/F 205 of the image analyzing unit 102. The image signal is continuously transmitted while a synchronous signal is included at the head thereof, so that it is possible to take in only the image of timing required for the image input I/F 205. The image taken into the image input I/F 205 is written in a memory 206, and processing and analysis are performed by an image processing unit 204. Details of the processing will be described later. A series of steps is performed in accordance with a program 207 written in an FROM. Control and necessary calculation for taking in the image in the image input I/F 205 and for performing image processing in the image processing unit 204 are performed by a CPU 203.

Here, the camera DSP 202 contains an exposure control unit 301 for performing exposure control and a register 302 which sets exposure time, and the CCD 201 captures an image for the exposure time set in the register 302 of the camera DSP 202. The register 302 can be rewritten by the CUP 203, and the rewritten exposure time is reflected at the time of capturing an image in and after the next frame or the next field. The exposure time can be controlled by turning on and off the power supply of the CCD 201 by the camera DSP 202, and the quantity of light exposed to the CCD 201 is restricted by the time during which the power supply is on. The exposure time control can be realized by an electronic shutter method as described above, and it can also be similarly realized by using a method of opening and closing a mechanical shutter. The exposure amount may be changed by adjusting an aperture. In the case of operating every other line as in the case of interlace, the exposure amount may be changed between the odd-numbered lines and the even-numbered lines.

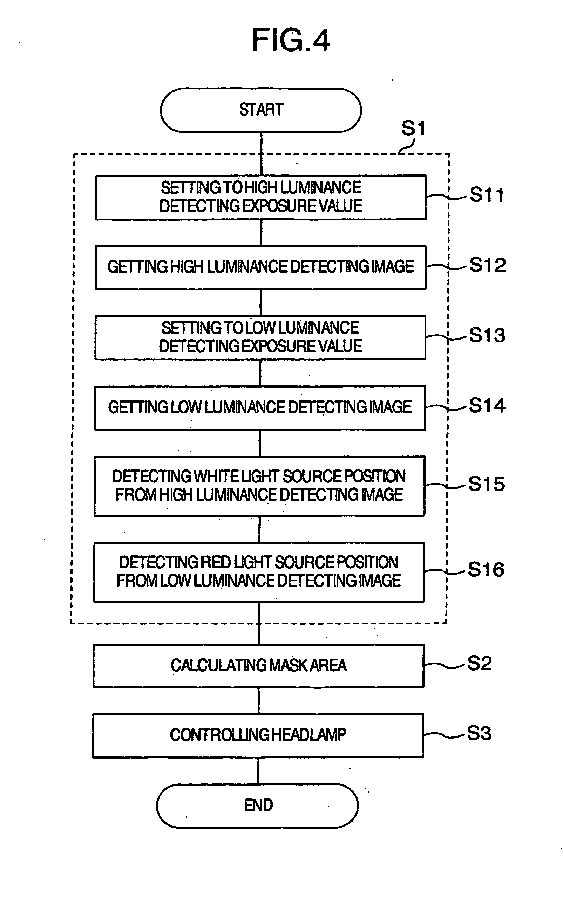

Fig. 4 is a flow chart showing the flow of the process of this embodiment. In steps from S11 to S14, an image for detecting high luminance and an image for detecting low luminance are obtained from the camera 101, and the image data is transferred to the image analyzing unit 102. The transferred image data includes synchronizing signals, and the CPU 203 performs processing relating to the image input and output using the above described synchronizing signals as interruption timing. In steps S15 and S16, the light spot position is detected from the image in the image analyzing unit 102, and the light distribution pattern which reduces the light quantity of a part of the upper portion above the light spot portion area detected in step S2 is determined. In step S3, the light distribution pattern projected by the headlight 104 is controlled by the headlight control unit 103.

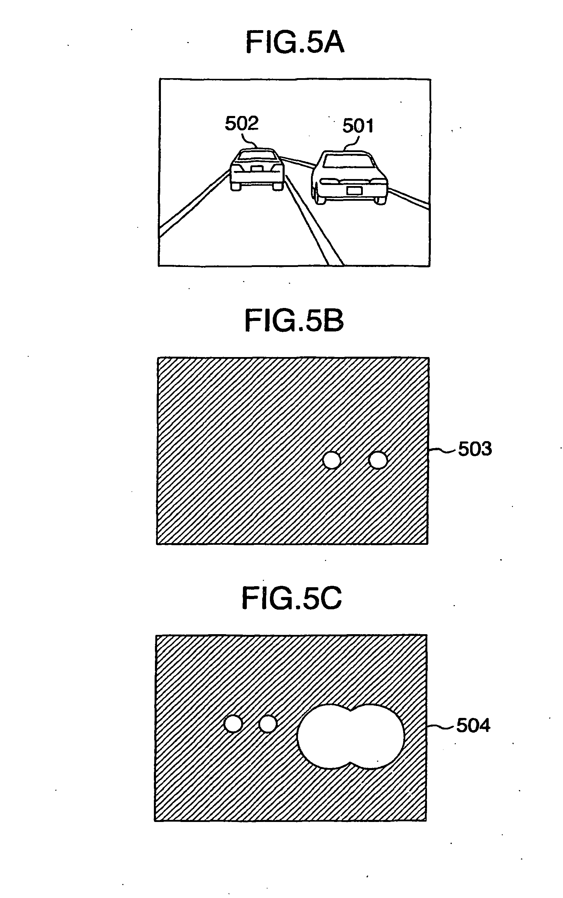

Next, the detailed processing in each of the steps will be described. The steps from S11 to S16 enclosed by the dotted line S1 are a step group for light source detection. In step S11, the CPU 203 in the image analyzing unit 102 sets the register 302 in the camera 101 at a high luminance detecting exposure time. This is the exposure time optimal for detecting a light spot with high luminance, and is selected to detect the headlight of the on-coming vehicle ahead or the light spot of the tail lamp in the relatively short distance. The exposure time is from about 1/120 seconds to 1/250 seconds, which depends on the sensitivity characteristics of the CCD 201 which is the image capturing element. Figs. 5A, 5B and 5C show examples of the captured image. When the state of Fig. 5A is captured for the high luminance detecting exposure time, the result is Fig. 5B. Since the luminance of the headlight of an on-coming vehicle 501 is high, it is come out as light spots as shown in Fig. 5B, but since the luminance value of the tail lamp of a preceding vehicle 502 is low, is not come out. In step S12, the digital image captured with the exposure time set in step S1 is inputted from the image input I/F 205, and stored in the memory 206. In step S13, the register 302 in the camera 101 is rewritten to store the low luminance detecting exposure time by the CPU 203 in the image analyzing unit 102. This is the exposure time optimal for detecting the light spot with low luminance, and is selected to detect the light spot of the tail lamp in a relatively long distance ahead. Therefore, the exposure time becomes longer than the one set in step S11, and is about 1/30 seconds to 1/60 seconds. Fig. 5C shows the image which is captured for the low luminance detecting exposure time. The low luminance light spot of the tail lamp of the preceding vehicle 502 can be captured, but since the headlight of the on-coming vehicle 501 is highly luminous, it causes blooming to saturate the peripheral pixels with white. In step S14, as with the case of step S12, the digital image captured with the exposure time set in step S13 is inputted from the image input I/F 205 and stored in the memory 206.

In steps S15 and S16, the image obtained from the camera is analyzed and the positions of the light spots are obtained. The processing is performed by the CPU 203 and the image processing unit 204. In step S15, the position of a high luminance light spot 601 is detected from a high luminance detecting image 503. The method for calculating the light spot position will be described in detail later. When the high luminance light spot position is obtained, a low luminance light spot position is detected by using a low luminance detecting image 504 in step S16. Here, the low luminance detecting image 504 includes the light spot of high luminance, and is likely to cause blooming.
However, there is no problem because in step S16 the position of a red light spot 602 is calculated from the low luminance detecting image. With the above procedure, the positions of the light spots 601 of the headlight of the on-coming vehicle, and the light spots 602 of the tail light of the preceding vehicle can be obtained respectively.

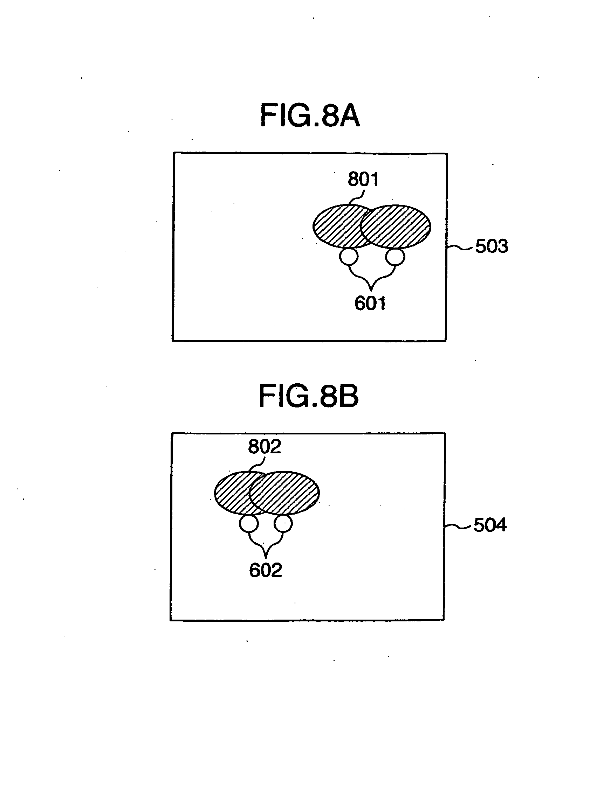

Next, a method of determining the positions of mask areas 801 and 802 in which the light quantity is decreased, based on the detected positions of the light spots of the headlight and the tail light will be described by using Fig. 8. The mask areas 801 and 802 are provided so as not to dazzle the drivers of the on-coming vehicle 501 and the preceding vehicle 502, respectively, and therefore, need to be set in portions where the drivers may exist. The headlights and the tail lights are generally mounted in positions lower than the positions of the drivers. Therefore, the positions of the mask areas 801 and 802 are set above the detected light spot 601 of the headlight and light spot 602 of the tail light. The sizes of the mask areas 801 and 802 are set so as not to be less than the sizes of the light spot 601 of the headlight and the light spot 602 of the tail light as shown in Fig. 8 for achieving the object of not dazzling the drivers. When the sizes of the light spot 601 of the headlight and the light spot 602 of the tail light are large, the on-coming vehicle 501 and the preceding vehicle 502 may be close to the own vehicle correspondingly, and therefore, the sizes of the mask areas 801 and 802 are also made large. Since the light spot 602 of the tail light is darker as compared with the light spot 601 of the headlight, the color of the light spot is taken into consideration when determining the size, and if it is the red light of the tail light, the size of the mask area 802 needs to be changed. Specifically, the mask area 802 is set to be large with respect to the light spot having the same size, as compared with the case that the light spot is white (headlight). This is because as compared with the case of the headlight, the preceding vehicle may be in a position near the own vehicle even if the light spot is small. Considering that the on-coming vehicle 501 looks slant at the time of passing by the on-coming vehicle 501, the driver does not always exist directly above the light spot 601 of the headlight and the light spot 602 of the tail light. Therefore, by making the shapes of the mask areas 801 and 802 oval shapes longer in the lateral direction as shown in Fig. 8, it is possible to irradiate a wide range as much as possible, while

reducing the risk of dazzling the drivers. The shapes of the mask areas 801 and 802 may be rectangular considering the easiness of control of the headlight and the calculation amount, in addition to the oval shapes as illustrated in Fig. 8. Further, the light reduction ratios of the mask areas 801 and 802 can be set freely from 0% to 100%.

Here, it is important that the mask areas 801 and 802 do not overlap the light source, and therefore, the reflector always reflects, which eliminates the phenomenon that projection light of the headlights exhibits hunching due to the reflector as in the conventional example.

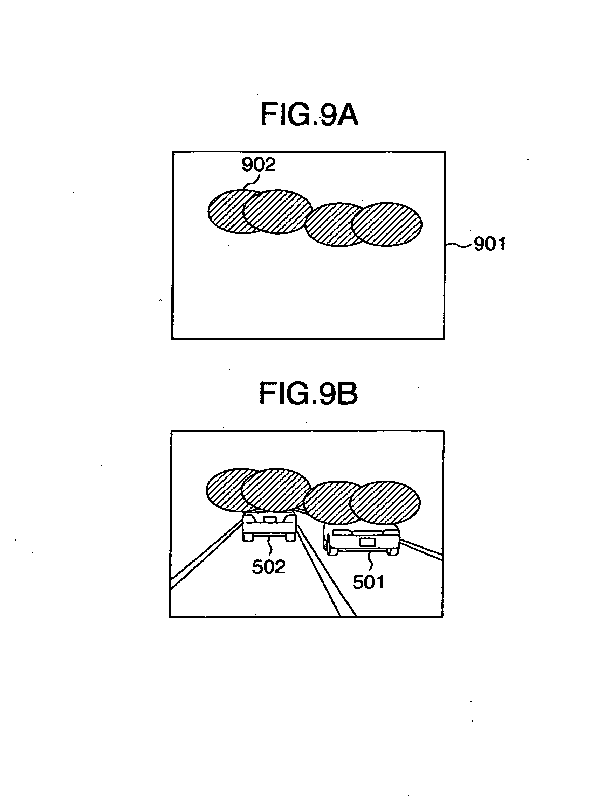

The mask areas 801 and 802 which are determined as above are transferred to the headlight control unit 103 in a video image form as a light distribution pattern video image 901 shown in Fig. 9. The light distribution pattern video image 901 is in the form of a gray scale video image of 8 bits. Specifically, the luminance value of the area desired to be irradiated other than the mask area 902 is set at 255, and the luminance value of the mask area 902 is set in the range of 0 to 255 depending on the light reduction amount. For example, if no light is desired to be irradiated to the mask area, the luminance value is set at zero. If it is set at zero, the light is not projected to the mask area theoretically and the purpose of preventing a dazzle is achieved, but since there is the possibility that the drivers of the on-coming vehicle and the preceding vehicle do not recognize the existence of the own vehicle, a very small amount of light of about 10 to 20 is set to be irradiated for safety. As a signal when the light distribution pattern video image 901 is transferred to the headlight control unit 103, a video image signal may be transferred. For this purpose, it may be possible to use a signal in any form such as analogue signals of NTSC, PAL and analogue RGB and the like, as well as digital signals of IEEE1394, a camera link, USB and the like. The analogue signal of NTSC is convenient when the camera and the headlight unit are away from each other. The digital signals of IEEE1394 and the like have the advantage of capable of transferring video images with high definition, and do not require AD/DA conversion.

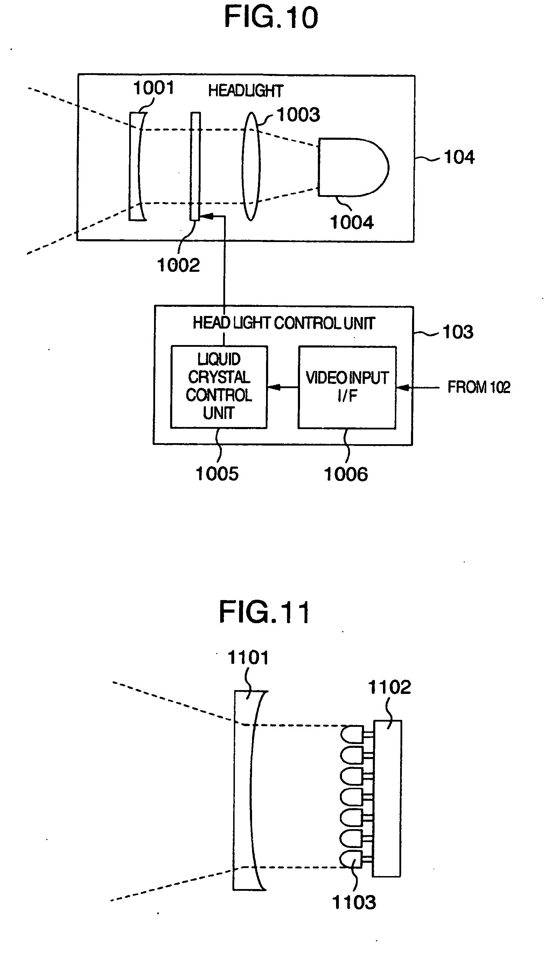

In Fig. 10, a video image input I/F 1006 receives the light distribution pattern video image 901 transferred to the headlight control unit, and a liquid crystal control unit 1005 controls the electric charge of a liquid crystal 1002 in the headlight. The liquid crystal 1002 shuts off the light when electric charges are applied to it, and transmits the light when electric charges are not applied to it, and therefore, the liquid crystal control unit 1005 conducts control so as to apply the electric charges to the portions of the mask area 902. The headlight 104 is constituted of a light source 1004, a condenser lens 1003, the liquid crystal 1002 and a light projection lens 1001, and changes the pattern to be projected by changing the pattern of the liquid crystal with the principle of the liquid crystal projector. As the light source 1004, a halogen lamp, a xenon lamp, and a high pressure mercury lamp are cited, and any of those may be used.

In this embodiment, the example of using the liquid crystal for light distribution pattern control of the headlight is described, but the light distribution pattern may be changed by using an LED array 1102 with high directivity as shown in Fig. 11. LEDs 1103 in Fig. 11 are controllable independently of each other, and only the LEDs 1103 irradiating the portion of the mask area 901 are stopped or reduced in luminance.

It should be further understood by those skilled in the art that although the foregoing description has been made on embodiments of the invention, the invention is not limited thereto and various changes and modifications may be made without departing from the scope of the appended claims.

## Claims

1. A headlight control apparatus, comprising:
a headlight (104) which irradiates a front direction of an own vehicle, the light quantity in each partial area in an irradiation range of the headlight being controllable independently of another partial area;
a camera (101) which is mounted on the vehicle to capture an image in the front direction of the own vehicle;
a control unit (103) which detects the position of a light spot (601, 602) in the image inputted from the camera (101), and controls an irradiation pattern of the headlight (104) based on the position of the light spot (601, 602), and
the control unit (103) controls the headlight (104) of the own vehicle so as to reduce the light quantity in a certain area above the position of the detected light spot (601, 602) while maintaining irradiation of the detected light spot (601, 602),
**characterized in that**
the size of the area (801, 802) in which the light quantity is reduced varies depending on the color of the light spot, wherein
if the color of said light spot (601, 602) is red, the area (801, 802) of reduced light quantity is set larger than if the color of said light spot (601, 602) is white.

2. The headlight control apparatus according to claim 1, wherein the control unit (103) comprises:
an image processing part which generates an irradiation pattern of the headlight (104); and
a headlight control part which receives an input of the irradiation pattern from the image processing part, and
controls irradiation of the headlight (104) based on the irradiation pattern, and wherein
the image processing part generates the irradiation pattern which reduces the light quantity in the certain area (801, 802) above the position of the detected light spot (601, 602) while maintaining irradiation of the detected light spot (601, 602).

3. The headlight control apparatus according to claim 1, wherein the size of the area (801, 802) in which the light quantity is reduced varies depending on the size of the light spot (601, 602).

4. The headlight control apparatus according to claim 1, wherein the size of the area (801, 802) in which the light quantity is reduced varies depending on the luminance of the light spot (601, 602).

5. The headlight control apparatus according to claim 1, wherein the size of the area (801, 802) in which the light quantity is reduced varies depending on the distance to the light spot area.

6. The headlight control apparatus according to claim 1, wherein the camera (101) is located inside the headlight unit.

7. The headlight control apparatus according to claim 6, wherein an optical axis of the headlight (104) and an optical axis of the camera (101) are parallel with each other.

8. The headlight control apparatus according to claim 2, wherein the image processing part transfers light distribution pattern video image information to the headlight control part.

9. The headlight control apparatus according to claim 8, wherein the video image information is an NTSC signal.

10. The headlight control apparatus according to claim 8, wherein the video image information is a PAL signal.

11. The headlight control apparatus according to claim 8, wherein the video image information is an analogue RGB signal.

12. The headlight control apparatus according to claim 8, wherein the video image information is of the Camera Link standard.

13. The headlight control apparatus according to claim 8, wherein the video image information is of the IEEE1394 standard.

14. The headlight control apparatus according to claim 1, wherein the headlight (104) is constituted of a light source (1004), a condenser lens part (1003), a liquid crystal part (1002), and a light projecting part (1001).

15. The headlight control apparatus according to claim 14, wherein the headlight (104) is constituted of LEDs (1102) in an array form.

16. The headlight control apparatus according to claim 1, wherein a headlight unit including said headlight (104) is provided on each of right and left sides, and
said camera (101) is mounted on either of the headlight units on the right and left sides.

17. The headlight control apparatus according to claim 1, wherein a headlight unit including said headlight (104) is provided on each of right and left sides, and
said camera (101) is mounted on each of the headlight units on the right and left sides.

## Patentansprüche

1. Scheinwerfersteuerungsvorrichtung mit:
einem Scheinwerfer (104), der eine vorderseitige Richtung des eigenen Fahrzeugs beleuchtet, wobei die Lichtmenge in jedem Teilbereich in einem Beleuchtungsbereich des Scheinwerfers unabhängig von einem anderen Teilbereich steuerbar ist;
einer Kamera (101), die an dem Fahrzeug angebracht ist, um ein Bild in vorderseitiger Richtung des eigenen Fahrzeugs aufzunehmen;
einer Steuerungseinheit (103), die die Position eines Lichtpunkts (601, 602) in dem von der Kamera (101) eingegebenen Bild erfasst und ein Beleuchtungsmuster des Scheinwerfers (104) auf der Grundlage der Position des Lichtpunkts (601, 602) steuert, und
die Steuerungseinheit (103) den Scheinwerfer (104) des eigenen Fahrzeugs steuert, um die Lichtmenge in einem bestimmten Bereich über der Position des erfassten Lichtpunkts (601, 602) zu reduzieren, während sie die Beleuchtung des erfassten Lichtpunkts (601, 602) aufrechterhält,
**dadurch gekennzeichnet, dass**
die Größe des Bereichs (801, 802), in dem die Lichtmenge reduziert ist, in Abhängigkeit von der Farbe des Lichtpunkts variiert, wobei,
wenn die Farbe des Lichtpunkts (601, 602) rot ist, der Bereich (801, 802) der reduzierten Lichtmenge größer eingestellt ist, als wenn die Farbe des Lichtpunkts (601, 602) weiß ist.

2. Scheinwerfersteuerungsvorrichtung nach Anspruch 1, wobei die Steuerungseinheit (103) umfasst:
ein Bildverarbeitungsteil, das ein Beleuchtungsmuster des Scheinwerfers (104) erzeugt;
und
ein Scheinwerfersteuerungsteil, das eine Eingabe des Beleuchtungsmusters vom Bildverarbeitungsteil empfängt und die Beleuchtung des Scheinwerfers (104) auf der Grundlage des Beleuchtungsmusters steuert, und wobei
das Bildverarbeitungsteil das Beleuchtungsmuster erzeugt, das die Lichtmenge in dem bestimmten Bereich (801, 802) über der Position des erfassten Lichtpunkts (601, 602) reduziert, während es die Beleuchtung des erfassten Lichtpunkts (601, 602) aufrechterhält.

3. Scheinwerfersteuerungsvorrichtung nach Anspruch 1, wobei die Größe des Bereichs (801, 802), in dem die Lichtmenge reduziert ist, in Abhängigkeit von der Größe des Lichtpunkts (601, 602) variiert.

4. Scheinwerfersteuerungsvorrichtung nach Anspruch 1, wobei die Größe des Bereichs (801, 802), in dem die Lichtmenge reduziert ist, in Abhängigkeit von der Leuchtdichte des Lichtpunkts (601, 602) variiert.

5. Scheinwerfersteuerungsvorrichtung nach Anspruch 1, wobei die Größe des Bereichs (801, 802), in dem die Lichtmenge reduziert ist, in Abhängigkeit von der Entfernung zum Lichtpunktbereich variiert.

6. Scheinwerfersteuerungsvorrichtung nach Anspruch 1, wobei sich die Kamera (101) in der Scheinwerfereinheit befindet.

7. Scheinwerfersteuerungsvorrichtung nach Anspruch 6, wobei eine optische Achse des Scheinwerfers (104) und eine optische Achse der Kamera (101) parallel zueinander sind.

8. Scheinwerfersteuerungsvorrichtung nach Anspruch 2, wobei das Bildverarbeitungsteil Lichtverteilungsmuster-Videobildinformation an das Scheinwerfersteuerungsteil überträgt.

9. Scheinwerfersteuerungsvorrichtung nach Anspruch 8, wobei die die Videobildinformation ein NTSC-Signal ist.

10. Scheinwerfersteuerungsvorrichtung nach Anspruch 8, wobei die Videobildinformation ein PAL-Signal ist.

11. Scheinwerfersteuerungsvorrichtung nach Anspruch 8, wobei die Videobildinformation ein analoges RGB-Signal ist.

12. Scheinwerfersteuerungsvorrichtung nach Anspruch 8, wobei die Videobildinformation von der Camera-Link-Norm ist.

13. Scheinwerfersteuerungsvorrichtung nach Anspruch 8, wobei die Videobildinformation von der IEEE-1394-Norm ist.

14. Scheinwerfersteuerungsvorrichtung nach Anspruch 1, wobei der Scheinwerfer (104) aus einer Lichtquelle (1004), einem Kollektivlinsenteil (1003), einem Flüssigkristallteil (1002) und einem Lichtprojektionsteil (1001) besteht.

15. Scheinwerfersteuerungsvorrichtung nach Anspruch 14, wobei der Scheinwerfer (104) aus LEDs (1102) in einer Anordnungsform besteht.

16. Scheinwerfersteuerungsvorrichtung nach Anspruch 1, wobei eine Scheinwerfereinheit einschließlich des Scheinwerfers (104) auf jeder der rechten und linken Seiten vorgesehen ist und die Kamera (101) auf einer der Scheinwerfereinheiten auf den rechten und linken Seiten angebracht ist.

17. Scheinwerfersteuerungsvorrichtung nach Anspruch 1, wobei eine Scheinwerfereinheit einschließlich des Scheinwerfers (104) auf jeder der rechten und linken Seiten vorgesehen ist und die Kamera (101) auf jeder der Scheinwerfereinheiten auf den rechten und linken Seiten angebracht ist.

## Revendications

1. Dispositif de commande de phare, comportant :
un phare (104) lequel éclaire une direction avant de son propre véhicule, la quantité de lumière dans chaque zone partielle dans une plage d'éclairage du phare pouvant être commandée de manière indépendante d'une autre zone partielle,
une caméra (101) qui est montée sur le véhicule pour capturer une image dans la direction avant du véhicule,
une unité de commande (103) qui détecte la position d'un spot lumineux (601, 602) dans l'image entrée à partir de la caméra (101), commande un motif d'éclairage du phare (104) sur la base de la position du spot lumineux (601, 602), et
l'unité de commande (103) commande le phare (104) du véhicule de manière à réduire la quantité de lumière dans une zone particulière au-dessus de la position du spot lumineux détecté (601, 602) tout en conservant l'éclairage du spot lumineux détecté (601, 602),
**caractérisé en ce que**
la taille de la zone (801, 802) dans laquelle la quantité de lumière est réduite varie en fonction de la couleur du spot lumineux, et
si la couleur dudit spot lumineux (601, 602) est rouge, la zone (801, 802) de quantité de lumière réduite est définie comme étant supérieure à celle si la couleur dudit spot lumineux (601, 602) est blanche.

2. Dispositif de commande de phare selon la revendication 1, dans lequel l'unité de commande (103) comporte :
une partie de traitement d'image laquelle génère un motif d'éclairage du phare (104), et
une partie de commande de phare qui reçoit une entrée du motif d'éclairage en provenance de la partie de traitement d'images, et commande l'éclairage du phare (104) sur la base du motif d'éclairage, et dans lequel
la partie de traitement d'images génère le motif d'éclairage qui réduit la quantité de lumière dans la zone particulière (801, 802) au-dessus de la position du spot lumineux détecté (601, 602) tout en conservant l'éclairage du spot lumineux détecté (601, 602).

3. Dispositif de commande de phare selon la revendication 1, dans lequel la taille de la zone (801, 802) dans laquelle la quantité de lumière est réduite varie en fonction de la taille du spot lumineux (601, 602).

4. Dispositif de commande de phare selon la revendication 1, dans lequel la taille de la zone (801, 802) dans laquelle la quantité de lumière est réduite varie en fonction de la luminance du spot lumineux (601, 602).

5. Dispositif de commande de phare selon la revendication 1, dans lequel la taille de la zone (801, 802) dans laquelle la quantité de lumière est réduite varie en fonction de la distance jusqu'à la zone de spot lumineux.

6. Dispositif de commande de phare selon la revendication 1, dans lequel la caméra (101) est positionnée à l'intérieur de l'unité de phare.

7. Dispositif de commande de phare selon la revendication 6, dans lequel un axe optique du phare (104) et un axe optique de la caméra (101) sont parallèles entre eux.

8. Dispositif de commande de phare selon la revendication 2, dans lequel la partie de traitement d'images transfère des informations d'image vidéo de motif de répartition de lumière vers la partie de commande de phare.

9. Dispositif de commande de phare selon la revendication 8, dans lequel les informations d'image vidéo sont un signal NTSC.

10. Dispositif de commande de phare selon la revendication 8, dans lequel les informations d'image vidéo sont un signal PAL.

11. Dispositif de commande de phare selon la revendication 8, dans lequel les informations d'image vidéo sont un signal RVB analogique.

12. Dispositif de commande de phare selon la revendication 8, dans lequel les informations d'image vidéo respectent la norme Camera Link.

13. Dispositif de commande de phare selon la revendication 8, dans lequel les informations d'image vidéo respectent la norme IEEE1394.

14. Dispositif de commande de phare selon la revendication 1, dans lequel le phare (104) est constitué d'une source de lumière (1004), d'une partie de lentille condenseuse (1003), d'une partie à cristaux liquides (1002) et d'une partie de projection de lumière (1001).

15. Dispositif de commande de phare selon la revendication 14, dans lequel le phare (104) est constituée de LED (1102) sous une forme de réseau.

16. Dispositif de commande de phare selon la revendication 1, dans lequel une unité de phare incluant ledit phare (104) est agencée sur chacun des côtés droit et gauche, et ladite caméra (101) est montée sur l'une ou l'autre des unités de phare sur les côtés droit et gauche.

17. Dispositif de commande de phare selon la revendication 1, dans lequel une unité de phare incluant ledit phare (104) est agencée sur chacun des côtés droit et gauche, et ladite caméra (101) est montée sur chacune des unités de phare sur les côtés droit et gauche.
